# EUROPEAN PATENT APPLICATION

(11) **EP 1 558 047 A1**
(43) Date of publication of application: **27.07.2005**
(21) Application number: 03707084.4
(22) Date of filing: 26.02.2003
(51) Int. Cl.: H04Q 7/38, H04L 12/56

(54) **DIVERSITY HANDOVER METHOD IN MOBILE COMMUNICATION, CONTROL STATION, AND MOBILE TERMINAL DEVICE**

(71) Applicant: FUJITSU LIMITED, Kawasaki-shi, Kanagawa 211-8588 (JP)
(72) Inventor: TAJIMA, Yoshiharu, c/o FUJITSU LIMITED, Kawasaki-shi, Kanagawa 211-8588 (JP)
(74) Representative: Hitching, Peter Matthew
(86) International application number: PCT/JP2003/002111
(87) International publication number: WO 2004/077870

(57) **Abstract**

Diversity handover is made possible in a mobile communication system which uses IP (Internet Protocol) as the communication signal format. Downlink packets are sent from a control station in parallel via a plurality of base stations so as to arrive simultaneously at a single terminal, and different IP addresses are imparted, as the destination IP addresses, to the packets addressed to the terminal and transmitted from the plurality of base stations. Also, packets to which have been imparted different IP addresses as transmission source addresses are transmitted simultaneously from a single terminal to a plurality of base stations, and the packets are transmitted to the control station via the base stations.

## Description

### TECHNICAL FIELD

This invention relates to a diversity handover (or soft handover) method, control station, and mobile terminal device in mobile communications such as that of automobile telephones and portable telephones, and in particular relates to a diversity handover method, control station and mobile terminal device which can be applied to cases in which, in mobile communications in which numerous base stations and mobile stations communicate via wireless communication channels, IP packets are used as the format for communication signals.

### BACKGROUND ART

In numerous current mobile communication systems, signal transmission based on circuit exchange methods is the mainstream; but packet-based signal transmission has become common. Hereafter, it is thought that transmission using IP (Internet Protocol), which is more compatible with the Internet, will become the mainstream. As IP transmission in mobile communication, methods known as Mobile IP and Cellular IP are being studied.

In Mobile IP and Cellular IP, IP is used as the format of signals transmitted within a network and over wireless intervals. Mobile IP is anticipated to be used over a comparatively wide range, but use while in motion is not being considered. On the other hand, Cellular IP, while having a narrow applicable range, adopts a routing method which enables use while in motion. Consequently when these methods are applied to mobile communication, it is expected that Mobile IP will be used in the network positioned above wireless control stations, and that Cellular IP will be used below this. In addition, Hierarchical Mobile IP (HMIP), which takes into consideration motion over a certain range, is also being studied.

In IP transmission, packet data is transmitted to the address which is the target or through a plurality of nodes, based on address information recorded in a header. When applying IP transmission to a mobile communication system, nodes correspond to base stations, mobile stations, network control stations, and similar.

In a mobile communication system employing CDMA or similar, diversity handovers, in which a single mobile station is simultaneously connected with and communicates with a plurality of base stations, are performed. Diversity handovers lower the probability of cutoffs during communication, improve the reception gain, and afford other advantages as well.

In the prior art, IP networks have been used only as fixed networks. Consequently there always exists only one path to one address. Thus when IP transmission techniques are applied without modification to mobile communications, diversity handovers, in which the same signal is transmitted over a plurality of paths, cannot be realized. While there have been some studies of diversity handover in IP transmission, the fact that when transmission timing between base stations is asynchronous the reception timing is not the same for different paths has not been taken into consideration. And, in Japanese Patent Laid-open No. 4-10720, packets including the headers transmitted and received by a plurality of base stations are assumed to be identical, so that IP packet transmission is not considered.

Thus execution of diversity handover in mobile communication using an IP network has not been possible.

Hence one object of this invention is to enable transmission of the same packet over a plurality of paths, and by this means to enable realization of diversity handover by a simple method.

### DISCLOSURE OF THE INVENTION

This invention realizes diversity handover by transmitting a single packet simultaneously via a plurality of paths, by overwriting header information.

That is, in a diversity handover method in a mobile communication system using IP as the communication signal format, downlink packets are transmitted in parallel from a control station via a plurality of base stations so as to arrive simultaneously at one terminal, and different IP addresses are imparted as destination IP addresses for packets transmitted from the plurality of base stations to the terminal. Moreover, uplink packets are transmitted from a terminal in parallel via a plurality of base stations, and different IP addresses are imparted as transmission source IP addresses for packets transmitted to the plurality of base stations, so that packets are transmitted to the control station via the base stations.

More specifically, different IP addresses are imparted to a terminal for each base station; in the control station, a plurality of packets are replicated having the above different IP addresses as the destination IP address; and each packet is transmitted to the same terminal via the base station corresponding to the destination IP address. The terminal selects, as the received data, the one among the received plurality of downlink packets with the best reception state.

Further, in the terminal, a plurality of packets having the above different IP addresses for each base station as the transmission source IP address are replicated; and each packet is transmitted to the control station via the base station corresponding to the transmission source IP address. The control station selects, as the communication data, the one among the plurality of uplink packets received via the plurality of base stations with the best reception state.

Thus by means of this invention, a single packet can be transmitted simultaneously over a plurality of paths, and so diversity handover can be realized by a simple method.

### BRIEF DESCRIPTION OF THE DRAWINGS

Fig. 1 shows the configuration of a mobile communication system to which this invention can be applied;
Fig. 2 explains a diversity handover state in a mobile communication system;
Fig. 3 is an overall view of a diversity handover sequence of this invention;
Fig. 4 is a diversity handover sequence diagram;
Fig. 5 shows the flow of diversity handover processing during downlink packet transmission of a control station;
Fig. 6 explains packets transmitted to base stations with the destination address overwritten to the care-of address according to the base station;
Fig. 7 shows the flow of diversity handover processing during uplink packet reception of the control station;
Fig. 8 shows the flow of diversity handover processing during uplink packet transmission of the mobile terminal;
Fig. 9 explains packets transmitted to base stations with the transmission source address overwritten to the care-of address according to the base station;
Fig. 10 shows the flow of diversity handover processing during downlink packet reception of the mobile terminal;
Fig. 11 shows the configuration of a control station; and,
Fig. 12 shows the configuration of a mobile terminal.

### BEST MODE FOR CARRYING OUT THE INVENTION

### (A) Mobile Communication System

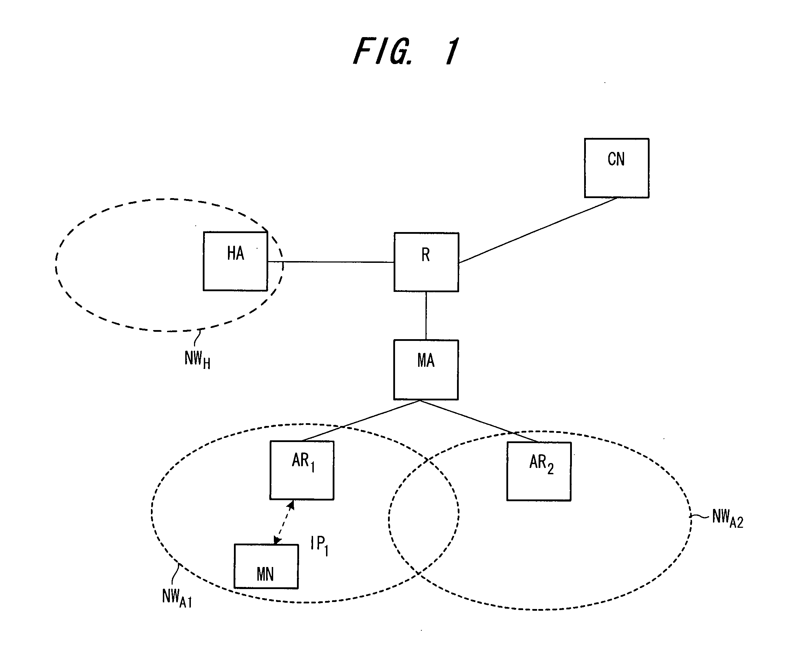

Fig. 1 is a drawing of the configuration of a mobile communication system to which this invention can be applied, showing the configuration for HMIP (Hierarchical Mobile IP). HA is a Home Agent, MA is a Mobile Agent, AR1 and AR2 are Access Routers, R is a Router, CN is a Corresponding Node, and MN is a Mobile Node; the access routers AR1, AR2 correspond to base stations in mobile communications, the mobile node MN corresponds to a mobile terminal, and the mobile agent MA corresponds to a control station.

The mobile node MN has a unique IP address IP₀ allocated by the home agent HA, and uses this IP address IP₀ when communicating from within the home network NW_{H}. However, if the mobile node MN moves from the home network NW_{H} to an access network NW_{A1}, an address IP₁ is provisionally allocated by the access router AR₁, and the mobile node MN uses this address IP₁ for communication. This provisional address, allocated in the access network NW_{A1} to which the mobile node MN has moved, is called a Care-of Address (CoA).

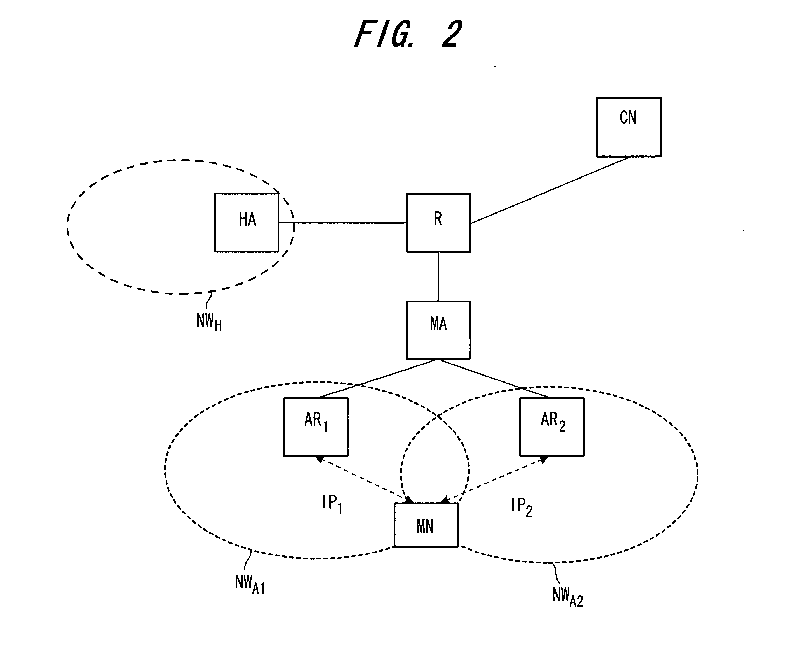

If, during mobile communication using the care-of address CoA (=IP₁) in the access network NW_{A1}, the mobile node MN approaches the adjacent access network NW_{A2} as shown in Fig. 2, handover to the access router AR₂ is initiated, and a new care-of address CoA (=IP₂) is allocated by the access router AR₂.

In HMIP, the mobile agent MA manages changes to the IP addresses for access routers AR₁ and AR₂ which are subordinate to the same mobile agent MA, and the home agent HA is not notified of changes to the IP addresses. In Mobile IP, a mobile node MN which is the mobile terminal has only one care-of address CoA, and so when handover is initiated the IP address is switched from IP₁ to IP₂. However, in this case diversity handover could not be executed. In order to execute diversity handover, the mobile node MN which is the mobile terminal must simultaneously communicate with the plurality of base stations (access routers) AR₁ and AR₂.

Hence in order to enable diversity handover, the mobile agent MA (1) performs replication of the downlink packet; (2) imparts a plurality of IP addresses, IP₁, IP₂ corresponding to the access routers AR₁, AR₂, to the mobile node MN; and (3) selective diversity processing of uplink packets is performed.

In other words, the mobile agent (control station) MA imparts to the mobile node (mobile terminal) MN different IP addresses IP₁ and IP₂ for each of the access routers (base stations) AR₁ and AR₂, replicates a plurality of packets having the different IP addresses IP₁ and IP₂ as destination IP addresses, and transmits each of the packets, via the base station AR₁ or AR₂ corresponding to the destination IP address, to the mobile terminal MN. The mobile terminal MN selects the packet with the best reception state from among the plurality of received downlink packets, and uses this packet as the received data.

Further, the mobile terminal MN replicates a plurality of packets having different IP addresses IP₁ and IP₂ for each of the base stations AR₁ and AR₂ as the transmission source IP address, and transmits each packet to the control station MA via the base station AR₁ or AR₂ according to the transmission source IP address. The control station MA selects the packet with the best reception state from among the plurality of uplink packets received via the plurality of base stations AR₁ and AR₂ as the communication data.

Thus by means of this invention, a single packet can be transmitted simultaneously over a plurality of paths, so that diversity handover can be realized using a simple method.

### (B) Diversity Handover Sequence

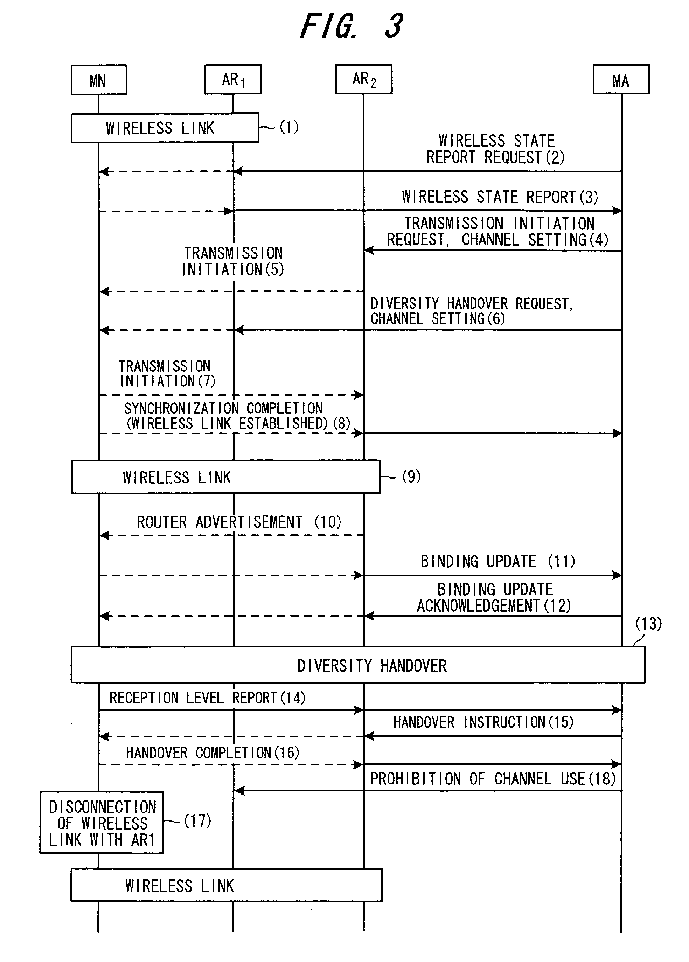

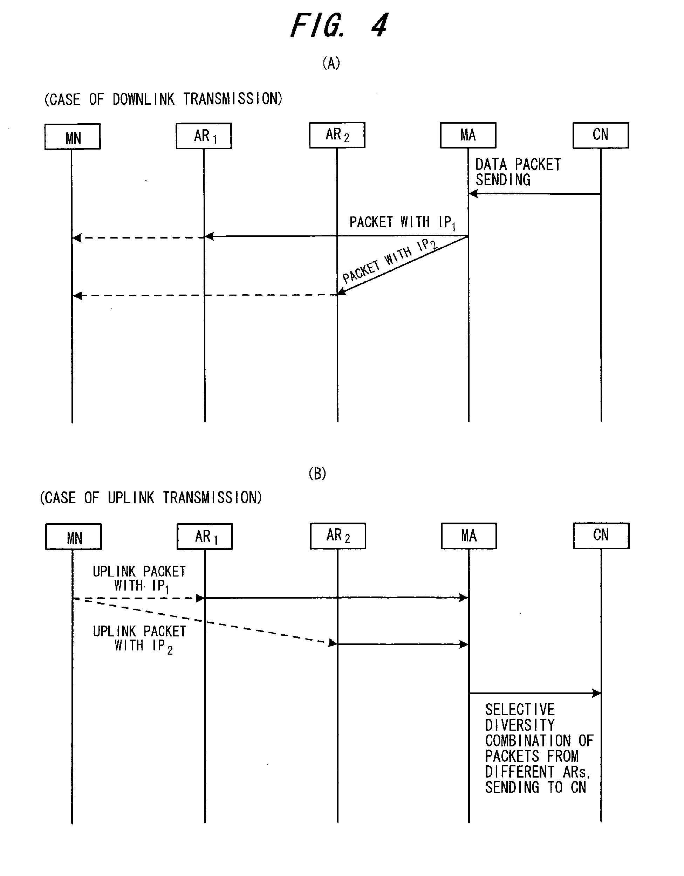

Fig. 3 is an overall view of a diversity handover sequence of this invention, and Fig. 4 is a diversity handover sequence diagram.

In Fig. 3, during the initial period the mobile terminal (mobile node) MN is provided with IP₁ as the care-of address CoA, and performs mobile communication via the base station (access router) AR₁ (see Fig. 1; step (1)). In this state, the control station (mobile agent) MA issues a request to the mobile terminal MN to periodically report the wireless state (step (2)). The mobile terminal MN, upon receiving the request for wireless state reports, measures the reception level from the peripheral base station AR₂, and reports to the control station MN via the base station AR₁ during communication (step (3)).

Based on the wireless state report from MN, the contrl station MA judges whether it is necessary to execute diversity handover, and if judged to be necessary, sets the channel (in the case of CDMA, a spreading code) in the adjacent base station AR₂ and issues a request to initiate transmission (step (4)), and the adjacent base station AR₂ initiates communication over the channel thus set (step (5)). Further, the control station MN sets the channel in the mobile terminal MN via the base station AR₁ during communication, and issues a request to initiate diversity handover (step (6)); as a result, the mobile terminal MN initiates transmission using the preset channel (step (7)).

When synchronization is established with the adjacent base station AR₂, the mobile terminal MN notifies the control station MA of synchronization completion (step (8)). As a result, the mobile terminal MN establishes wireless links with both the base stations AR₁ and AR₂ simultaneously, and enters a state in which communication is possible (step (9)).

In this state, the adjacent base station AR₂ issues a router advertisement to the mobile terminal MN (step (10)), and upon receiving the router advertisement, the mobile terminal MN performs a binding update for the control station (step (11)), and the control station MA notifies the base station AR₂ and mobile terminal MN of a new care-of address CoA (=IP₂) corresponding to the base station AR₂ (see Fig. 2; step (12)).

Through the above processing, diversity handover is made possible, and diversity handover is performed according to (A) and (B) in Fig. 4 (step (13)). That is, in the case of downlink transmission (see (A) in Fig. 4), upon receiving a packet addressed to the mobile terminal MN from the corresponding node CN, the control station MA replicates two packets having different IP addresses IP₁ and IP₂ as destination IP addresses, and transmits each packet to the mobile terminal MN via the base station AR₁ or AR₂ corresponding to the destination IP address. The mobile terminal MN selects the packet with the best reception state among the plurality of received downlink packets, for use as the received data.

In the case of uplink transmission (see (B) in Fig. 4), the mobile terminal MN replicates a plurality of packets having different IP addresses IP₁, IP₂ for each base station AR₁, AR₂ as the transmission source IP address, and transmits each packet to the control station MA via the base station AR₁ or AR₂ corresponding to the transmission source IP address. The control station MA selects the packet with the best reception state from among the plurality of uplink packets received by the plurality of base stations AR₁, AR₂ as the communication data, and sends this to the core network.

When, in parallel with the above diversity handover processing, the intensity of a pilot signal received by the mobile terminal MN from the base station AR₁ continuously remains below a preset level for at least a preset length of time, the mobile terminal MN notifies the control station MA of the reception level via the base station AR₁ (step (14)). In response to this notification, the control station MA decides to end communication between the mobile station MN and base station AR₁, and issues an instruction for handover to the mobile terminal MN via the base station AR₂ (hard handover) (step (15)). The mobile station MN, upon receiving the handover instruction, transmits a handover completion message to the control station MA (step (16)), and disconnects the wireless circuit with the base station AR₁ (step (17)). Upon receiving the handover completion message, the control station MA issues an instruction to the base station AR₁ prohibiting use of the communication channel (step (18)), to complete diversity handover control. Thereafter, the mobile station MN performs mobile communication via the base station AR₂.

### (C) Diversity Handover Processing by Various Units

### (a) Processing by the control station MA

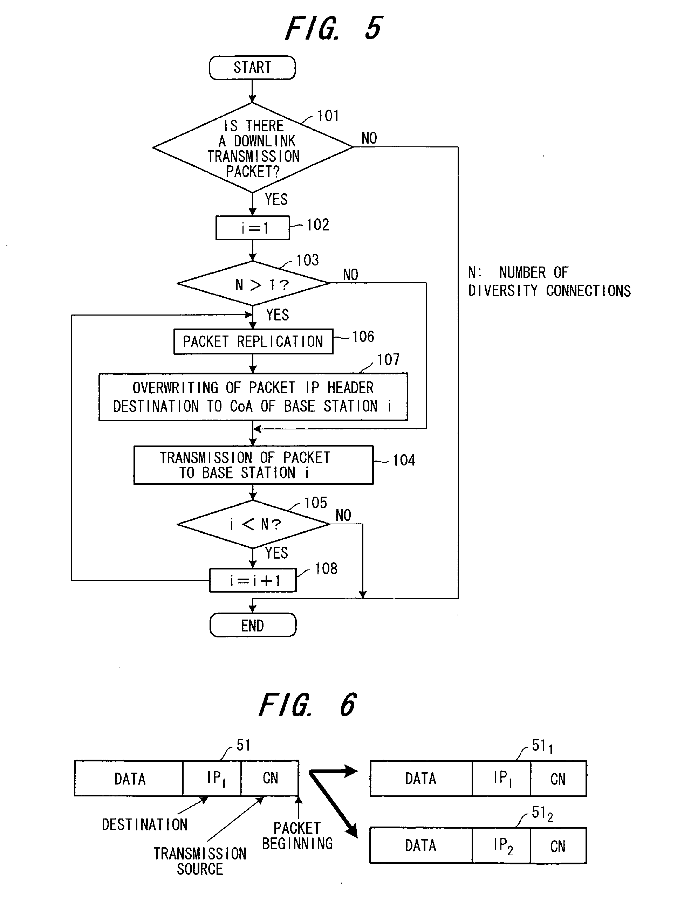

Fig. 5 shows the flow of diversity handover processing during downlink packet transmission of a control station MA. The control station MA receives a packet addressed to a mobile terminal from a corresponding node CN, and sends the packet in order to the base station. In this state, a check is performed for the existence of a packet to be sent to the terminal (step 101), and if a packet exists then i is set to 1 (step 102), and a check is performed to determine whether the number of diversity connections N is 1 or greater (step 103). The number of diversity connections N is the number of packet replications; in the ordinary state with no diversity handover, N=1, and in a diversity handover state the number is the number of peripheral base stations involved, such as for example N=2. Hence in step 103 a judgment is made as to whether the state is a diversity handover state.

If N=1 and the state is not a diversity handover state, the packet is sent to the base station i with which communication is currently in progress (step 104), and a check is performed as to whether i<N (step 105); because the result is "NO", processing is ended.

On the other hand, if in step 103 N>1, that is, if the state is a diversity handover state, then the packet is replicated once (step 106), the destination address in the IP header of the received packet is overwritten with the care-of address CoA of base station i (step 107), and the packet is sent to base station i (base station AR₁) (step 104); in addition, a check as to whether i<N is performed (step 105), and because the result is "YES", i is incremented by setting i+1 → i (step 108), and the processing of step 106 and later is repeated. That is, the packet is replicated once (step 106), the destination address in the IP header of the received packet is overwritten with the care-of address CoA of base station i (step 107), and the packet is sent to base station i (base station AR₂) (step 104); in addition, a check whether i<N is performed, and because the result is "NO", processing is ended (step 105).

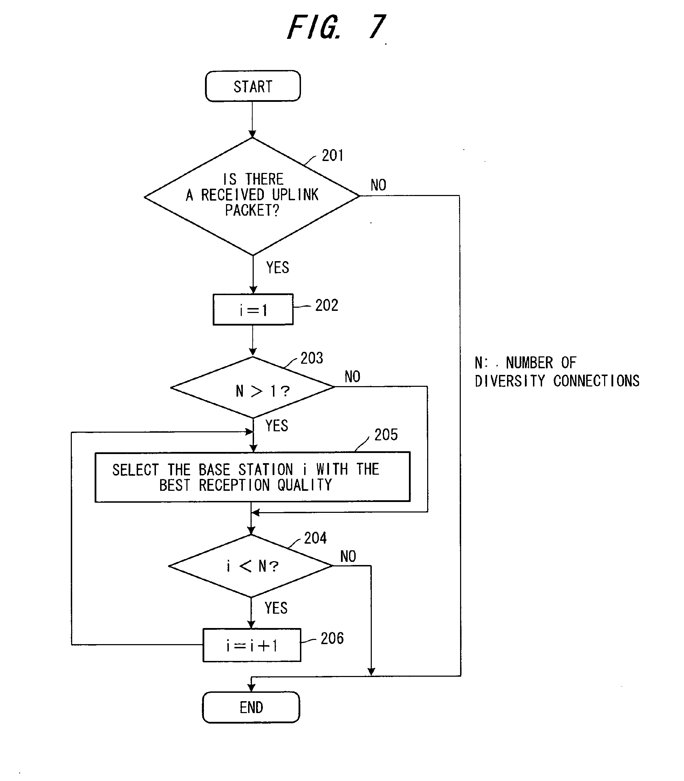

Fig. 6 shows packets 51₁, 51₂ with the destination address IP₁ of the received packet 51 overwritten with the care-of addresses IP₁, IP₂ corresponding to the base stations AR₁, AR₂, and sent to the base stations AR₁, AR₂.

Fig. 7 shows the flow of diversity handover processing during uplink packet reception of the control station MA.

A check is performed as to whether an uplink received packet exists (step 201), and if a packet exists, i is set to 1 (step 202), and a check is performed as to whether the number of diversity connections N is 1 or greater (step 203).

If N=1 and the state is not a diversity handover state, the received packet is input and a check as to whether i<N is performed (step 204), and because the result is "NO" processing is ended, and execution returns to the beginning.

If on the other hand N>1 in step 203, that is, if the state is a diversity handover state, then for example the base station i with the best SIR is selected (step 205), and a check is performed as to whether i<N (step 204); because the result is "YES", i is incremented by i+1 → i (step 206), and then the processing of step 205 and later is repeated. By this means, the base station with the best SIR is detected, so that subsequently the packets from this base station are captured and processed.

### (b) Processing by the mobile terminal MN

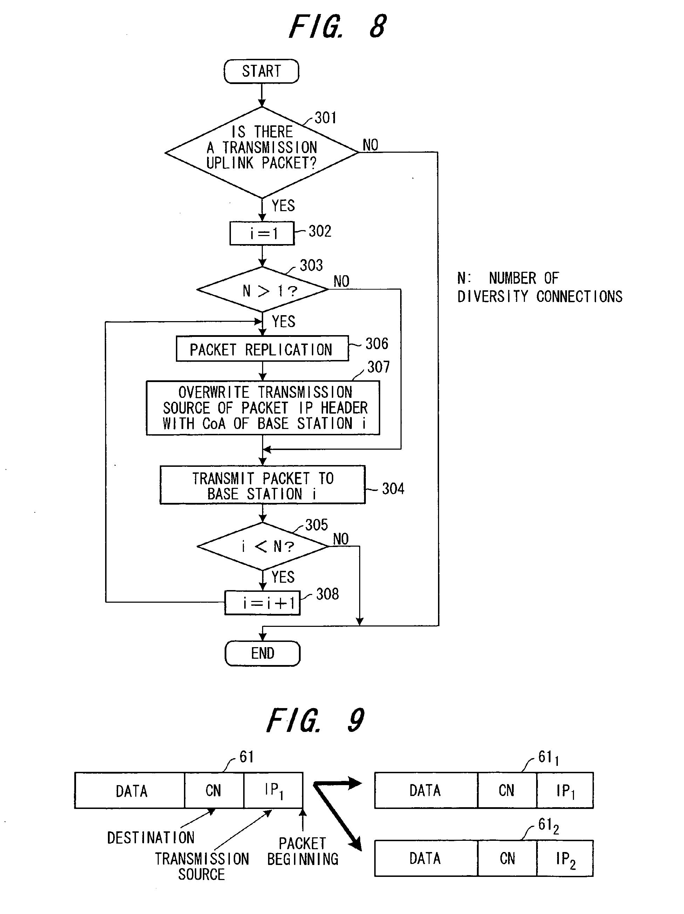

Fig. 8 shows the flow of diversity handover processing during uplink packet transmission of the mobile terminal MN. If there exists data to be transmitted to the other-party corresponding node (terminal) CN, the mobile terminal MN creates a packet, stores the packet in a buffer, and transmits the packet in order. The mobile terminal MN checks whether there is an uplink packet to be transmitted to the other-party corresponding node (terminal) CN (step 301), and if a packet exists, sets i=1 (step 302), and checks whether the number of diversity connections N is 1 or greater (step 303). The number of diversity connections N is the number of packet replications; in a normal state without diversity handover, N=1, and in a diversity handover state, the number is the number of peripheral base stations, for example N=2. Hence in step 303 a judgment is made as to whether the state is a diversity handover state.

If N=1, and the state is not a diversity handover state, then the uplink packet is sent to the base station i with which the mobile terminal MN is currently communicating (step 304), and a check is performed as to whether i<N (step 305); because the result is "NO", processing is ended.

On the other hand, if in step 303 N>1, that is, if the state is a diversity handover state, then the packet is replicated once (step 306), and the transmission source address of the IP header of the uplink packet is overwritten with the care-of address CoA (=IP₁) of the base station i (step 307); the packet is sent to the base station i (base station AR₁) (step 304). A check is performed as to whether i<N (step 305), and because the result is "YES", i is incremented as i+1 → i (step 308), and the processing of step 306 and later is repeated. That is, the packet is replicated once (step 306), the destination address in the IP header of the uplink packet is overwritten with the care-of address CoA (=IP₂) of the base station i (step 307), the packet is sent to the base station i (base station AR₂) (step 304), a check is then performed as to whether i<N, and because the result is "NO", processing is ended (step 305).

Fig. 9 shows packets 61₁, 61₂ in which the transmission source address IP₁ of the transmission packet 61 is overwritten by care-of addresses IP₁, IP₂ corresponding to the base stations AR₁, AR₂, and which are sent to the base stations AR₁, AR₂.

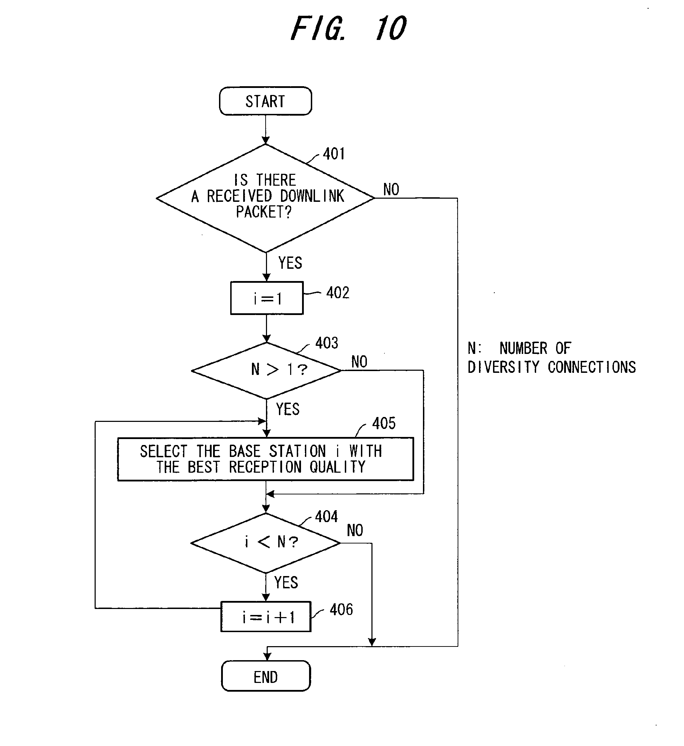

Fig. 10 shows the flow of diversity handover processing during downlink packet reception of the mobile terminal MN.

A check is performed as to whether a downlink received packet exists (step 401), and if such a packet exists, i is set to 1 (step 402), and a check is performed as to whether the number of diversity connections N is 1 or greater (step 403).

If N=1 and the state is not a diversity handover state, then the received packet is captured, and a check as to whether i<N is performed (step 404); because the result is "NO", processing is ended, and execution returns to the start.

If on the other hand N>1 in step 403, that is, if the state is a diversity handover state, then for example the base station i with the best SIR is selected (step 405), and a check is performed as to whether i<N (step 404); because the result is "YES", i is incremented by i+1 → i (step 406), and then the processing of step 405 and later is repeated. By this means, the base station with the best SIR is detected, so that subsequently the packets from this base station are captured and processed.

### (D) Configuration of Various Units

### (a) Control station MA

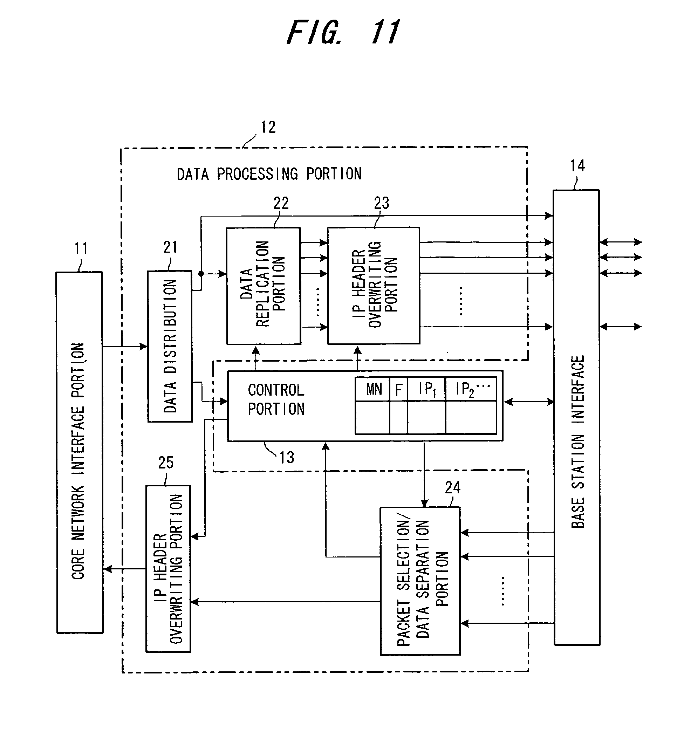

Fig. 11 shows the configuration of a control station MA; the core interface 11 receives downlink packets from corresponding nodes CN and transmits uplink packets to corresponding nodes CN. The data processing portion 12 replicates downlink packets, overwrites IP headers in downlink packets, selects uplink packets, overwrites headers in uplink packets, and performs other processing. The control portion 13 (1) manages, for each mobile terminal MN subordinate thereto, IP addresses corresponding to base stations and whether the state is a diversity handover state; (2) instructs the data processing portion 12 to replicate downlink packets and overwrite IP headers; (3) issues instructions to select packets according to the reception state (for example, the SIR) of uplink packets; and, (4) performs diversity handover control. The base station interface portion 14 transmits downlink packets to base stations AR₁, AR₂, ..., and receives uplink packets from base stations AR₁, AR₂, ....

The following processing of downlink packets is performed. When a downlink packet is input from the core network interface portion 11, the data distribution portion 21 inputs the packet to the replication portion 22 and base station interface portion 14, and inputs the IP header portion to the control portion 13. The control portion 13 identifies the destination terminal from the header information. The control portion 13 manages, for each mobile terminal MN subordinate thereto, the diversity handover state F and IP addresses IP₁, IP₂ and similar corresponding to base stations, in memory 20, and references this managed data to perform the processing of Fig. 5. The control portion 13 does not instruct the data replication portion 22 to perform data replication if the destination terminal is not in a diversity handover state, and does not instruct the IP header overwriting portion 23 to perform overwriting. As a result, the base station interface portion 14 transmits packets input directly from the data distribution portion 21 to the prescribed base station.

On the other hand, if the state is the diversity handover state, the control portion 13 instructs the data replication portion 22 to replicate data, and instructs the IP header overwriting portion 23 to input prescribed destination addresses IP₁, IP₂, ..., and overwrite the IP headers.

The data replication portion 22 replicates the data (packet) the number of times instructed, and inputs the results to the IP header overwriting portion 23. The IP header overwriting portion 23 writes, as the destination address in the IP headers of replicated packets, the IP addresses specified by the control portion 13 (see Fig. 6), and inputs the results to the base station interface portion 14. The base station interface portion 14 transmits the replicated downlink packets to the respective base stations AR₁, AR₂, ..., which are in communication during the diversity handover.

The control portion 13 performs the processing shown in Fig. 7 of uplink packets. That is, the control portion 13 references management data, and if the state is a diversity handover state, instructs the packet selection/data separation portion 24 to select the best packet. In response, the packet selection/data separation portion 24 measures the reception state (SIR) of packets input from each base station, decides for which base station the reception state (SIR) is best, and selects the packet input from this base station, and in addition inputs the packet to the IP header overwriting portion 25, and inputs the IP header to the control portion 13.

The control portion 13 references management data in memory 30 to determine the transmission source IP address to be added to an uplink packet, and inputs the transmission source IP address to the IP header overwriting portion 25. The IP header overwriting portion 25 overwrites the transmission source IP address of the packet input by the packet selection/data separation portion 24 with the IP address input by the control portion 13, and inputs the result to the core network interface portion 11; the core network interface portion 11 sends the uplink packet to the corresponding node CN.

On the other hand, if the state is not a diversity handover state, the control portion 13 notifies the packet selection/data separation portion 24 of this fact. As a result, the packet selection/data separation portion 24 selects the packet input from the base station interface 14, inputs the packet to the IP header overwriting portion 25, and inputs the IP header to the control portion 13. The control portion 13 inputs to the IP header overwriting portion 25 the fact that there is no change to the transmission source IP address of the uplink packet. As a result, the IP header overwriting portion 25 inputs the packet input from the packet selection/data separation portion 24 to the core network interface portion 11 without modification, and the core network interface portion 11 sends the uplink packet to the corresponding node CN.

In the above, the packet from the base station with the best SIR was selected; but the base station with the maximum reception level can be judged, and packets from this base station selected instead.

### (b) Mobile terminal MN

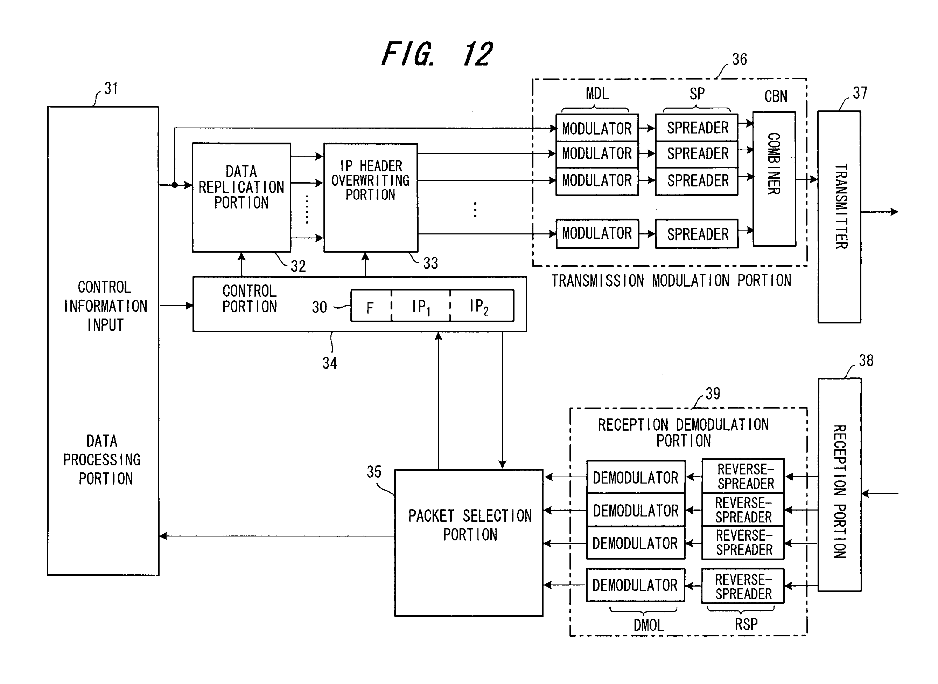

Fig. 12 shows the configuration of a mobile terminal; the data processing portion 31 outputs transmission packets and control information, as well as receiving downlink packets and processing data. The data replication portion 32 replicates uplink packets according to instructions from the control portion 34, and overwrites IP headers (transmission source IP addresses) according to instructions from the control portion 34. The control portion 34 (1) manages, in memory 30, IP addresses according to whether the mobile terminal MN is in a diversity handover state and according to the base station; (2) instructs the data replication portion 32 and IP header overwriting portion 33 to replicate uplink packets and overwrite IP headers; (3) instructs the packet selection portion 35 to select downlink packets according to the reception state (for example, SIR); and (4) performs diversity handover control.

The transmission modulation portion 36 comprises modulators MDL for each base station, code spreaders SP, and a combiner CBN to combine the output of the code spreaders. The transmitter 37 converts the output of the combiner CBN into a high-frequency signal and transmits the result. The reception portion 38 converts the received signal into a baseband signal and inputs the result to the reception demodulation portion 39. The reception demodulation portion 39 comprises, for each base station, a reverse-spreader RSP and a demodulator DMDL.

The packet selection portion 35 decides which is the base station with the best reception state, and inputs received downlink packets to the data processing portion 31, while also separating the IP header and inputting the header to the control portion 34.

Uplink packets are subjected to the following processing.

The control portion 13 manages in memory 30 the diversity handover status F of the mobile terminal MN itself and the IP addresses IP₁, IP₂ corresponding to base stations, and so references this management data to perform the processing of Fig. 8. That is, the control portion 34, if not itself in a diversity handover state, does not instruct the data replication portion 32 to replicate data, and does not instruct the IP header overwriting portion 33 to perform overwriting. As a result, the transmitter 37 sends toward a prescribed base station only the spreading signal input via the topmost modulator and spreader of the transmission modulation portion 36.

On the other hand, if the state is a diversity handover state, the control portion 34 instructs the data replication portion 32 to replicate the data, and also inputs the prescribed destination addresses IP₁, IP₂, ..., and instructs the IP header overwriting portion 33 to overwrite the IP header.

The data replication portion 32 replicates the data (packet) the number of times instructed, and inputs the results to the IP header overwriting portion 33. The IP header overwriting portion 33 overwrites the transmission source addresses in the IP headers of the replicated packets with the IP addresses indicated by the control portion 34 (see Fig. 9), and inputs the results to the transmission modulation portion 36. The plurality of corresponding modulators MDL of the transmission modulation portion 36 perform, for example, QPSK modulation, and in addition each of the spreaders SP performs spreading using a prescribed spreading code; the results are combined by the combiner CBN and input to the transmitter 37. The transmitter 37 converts the combined signal into a high-frequency signal, which is transmitted.

The control portion 34 performs the processing shown in Fig. 10 on downlink packets. That is, the control portion references the management data, and if the state is a diversity handover state, instructs the packet selection portion 35 to select the best packet. In response, the packet selection portion 35 measures the SIR of packets input from each base station, decides for which base station the SIR is best, and selects the packet input from that base station, and inputs the packet to the data processing portion 31, as well as inputting the IP header to the control portion 34.

On the other hand, the control portion 34 references the management data and, if the state is not a diversity handover state, notifies the packet selection portion 35 of this fact. In response, the packet selection portion 35 inputs the packet input from the reception demodulation portion 39 to the data processing portion 31 without modification, and also inputs the IP header to the control portion 13.

In the above explanation, the packet from the base station with the best SIR was selected; but the base station with the highest reception level can be identified, and packets from this base station selected.

In Fig. 12, modulators and spreaders are provided for each packet, but by using a switch and performing time-based switching, a configuration can be employed using a single modulator and spreader. Similarly, by using a switch for time-based switching, a configuration employing a single demodulator and reverse-spreader can be used.

Thus by employing this invention in an automobile telephone, portable telephone or other mobile communication system using IP packets as the format of communication signals, diversity handover, which had been difficult in the prior art, can be easily realized.

## Claims

1. A diversity handover method, in a mobile communication system using IP (Internet Protocol) as the communication signal format, comprising steps of:
sending downlink packets from a control station in parallel via a plurality of base stations so as to arrive simultaneously at a single terminal; and,
imparting different IP addresses, as the destination IP addresses, to the packets addressed to said terminal and transmitted from said plurality of base stations.

2. The diversity handover method according to Claim 1, further comprising steps of:
transmitting simultaneously packets to which said different IP addresses are imparted as transmission source addresses, from said single terminal to said plurality of base stations, and transmitting the packets to the control station via each of said base stations.

3. The diversity handover method according to Claim 1, further comprising steps of:
imparting different IP addresses to said terminal for each base station:
replicating a plurality of packets having said different IP addresses as destination IP addresses in said control station; and
transmitting each packet to said terminal via a base station according to the destination IP address.

4. The diversity handover method according to Claim 2, further comprising steps of:
imparting different IP addresses for each base station to said terminal:
replicating a plurality of packets having said different IP addresses as the transmission source IP address in said terminal; and
transmitting each packet to said control station via a base station corresponding to the transmission source IP address.

5. The diversity handover method according to Claim 1 or Claim 3, wherein the terminal selects a downlink packet, among the plurality of received downlink packets, with the best reception state as received data.

6. The diversity handover method according to Claim 2 or Claim 4, wherein the control station selects a uplink packet, among the plurality of uplink packets received via the plurality of base stations, with the best reception state as communication data.

7. A control station, in a mobile communication system using IP (Internet Protocol) as the communication signal format, comprising:
means for receiving packets addressed to terminals from a core network;
means for imparting a different IP address for each base station to a terminal in a diversity handover state;
means for replicating a plurality of packets having said different IP addresses as destination IP addresses, when a packet addressed to said terminal is received from the core network; and,
means for sending each packet to a base station corresponding to the destination IP address.

8. The control station according to Claim 7, further comprising:
means for selecting a uplink packet with the best reception state among the plurality of uplink packets received from one terminal in a diversity handover state via a plurality of base stations.

9. A mobile terminal device, in a mobile communication system using IP (Internet Protocol) as the communication signal format, comprising:
means for holding different specified IP addresses for each base station;
means for replicating a plurality of packets having said different IP addresses as transmission source IP addresses of packets to be transmitted; and,
means for sending each of said replicated packets to a base station corresponding to the transmission source IP address.

10. The mobile terminal device according to Claim 9, further comprising means for selecting, in the diversity handover state, a downlink packet with the best reception state among the plurality of downlink packets received from a plurality of base stations.
